# EUROPEAN PATENT APPLICATION

(11) **EP 4 831 346 A1**
(43) Date of publication of application: **28.10.2026**
(21) Application number: 24907923.7
(22) Date of filing: 06.12.2024
(51) Int. Cl.: C23C 28/02, C23C 2/12, C23C 2/40, C23C 2/26, C23C 2/28, C25D 3/20, C25D 3/22, C25D 3/12, C25D 5/48, C25D 5/10

(54) **ALUMINUM-PLATED STEEL MATERIAL, HOT-FORMED MEMBER, AND MANUFACTURING METHOD THEREFOR**

(30) Priority: 18.12.2023 KR 20230184359
(71) Applicant: POSCO Co., Ltd, Gyeongsangbuk-do 37859 (KR)
(72) Inventor: HWANG, Hyeon-Seok, Gwangyang-si, Jeollanam-do 57807 (KR); JUNG, Woo-Sung, Gwangyang-si, Jeollanam-do 57807 (KR); LEE, Kang-Min, Gwangyang-si, Jeollanam-do 57807 (KR); OH, Kkoch-Nim, Gwangyang-si, Jeollanam-do 57807 (KR); KIM, Sang-Heon, Gwangyang-si, Jeollanam-do 57807 (KR); OH, Ji-Eun, Gwangyang-si, Jeollanam-do 57807 (KR)
(74) Representative: Meissner Bolte Partnerschaft mbB
(86) International application number: PCT/KR2024/019893
(87) International publication number: WO 2025/135639

(57) **Abstract**

The present invention relates to aluminum-plated steel material for hot-formed members used in automotive parts and a manufacturing method therefor.

## Description

### Technical Field

The present disclosure relates to an aluminum-plated steel material for hot-formed members used in automotive parts and the like, and a method for manufacturing the same.

### Background Art

Recently, high-strength steel has increasing been used for weight reductions in automobiles, but since in high-strength material rupture during working or springback after working may occur, forming of products having a complicated and precise shape is difficult. In order to solve the problems, a method called hot forming or hot press forming (HPF) has been expanding.

The hot forming is easily performed since a steel material is heated usually to 800 to 900°C and working (press working) is performed in a heated state, and has a benefit of increasing strength of a molded article by quenching through a mold. However, when the steel material is heated to a high temperature, surface oxidation on the surface of a steel material may not be avoided. Thus, a process of removing an oxide from the surface of the steel material should be added after press forming, which involves a cost increase problem. In order to prevent this, a plated steel material having an aluminum plating layer on the surface of a steel material (Patent Documents 1 and 2) is being used as a material for hot forming.

However, a plating layer having a low melting point turns into a liquid phase during a heating process for hot forming of the plated steel material, and as the liquid phase comes into contact with the atmosphere to dissociate moisture (H₂O) included in the atmosphere into oxygen (O₂) and hydrogen (H), oxygen remains as an oxide on the surface layer, and hydrogen becomes a solid solution on the plating layer and is accumulated. In this state, quenching is performed after forming working, and a large amount of hydrogen remains in the solid phase plating layer. However, the solid phase plating layer has a lower solid solubility of hydrogen than the liquid phase, hydrogen diffuses and moves from the plating layer into the surroundings, a portion of the hydrogen enters into a steel material, and hydrogen introduced to the steel material gather in the bond to cause hydrogen delayed fracture, thereby causing a hydrogen embrittlement problem.

Therefore, a method for solving the hydrogen embrittlement problem is required.
(Patent Document 1) U.S. Patent Registration No. 6,296,805
(Patent Document 2) Japanese Patent Registration No. 3845271

### Summary of Invention

### Technical Problem

An aspect of the present disclosure is to provide an aluminum-plated steel material which improves resistance to hydrogen embrittlement of a hot-formed member, and a method for manufacturing the same.

An object of the present disclosure is not limited to the above description. Additional objects of the present disclosure are described throughout the specification, and any person with ordinary skill in the art to which the present disclosure pertains has no difficulty in understanding of the additional object of the present disclosure from the description in the specification of the present disclosure.

### Solution to Problem

According to an aspect of the present disclosure, an aluminum-plated steel material comprises: a base steel, and an aluminum-based plating layer formed on the base steel,
wherein a metal layer is comprised on the aluminum-based plating layer, and
the metal layer comprises a metal having higher Gibbs free energy than Al in a reduction reaction with moisture in a gas state at a temperature of 700°C or higher.

The metal may be one or more of Fe, Zn, Ni, and Mg.

When the metal is Fe, its plating amount may be 0.7 to 3.5 g/m².

When the metal is Ni, its plating amount may be 2.0 to 10.0 g/m².

When the metal is Zn, its plating amount may be 1.0 to 40 g/m².

The base steel may comprise, by weight: 0.02 to 0.6% of C, 0.001 to 2% of Si, 0.001 to 1% of Al, 0.1 to 4% of Mn, 0.05% or less of P, 0.02% or less of S, 0.02% or less of N, 0 to 0.1% of Ti, 0.0001 to 0.01% of B, 0 to 1.00% of Cu, 0 to 1.00% of Mo, 0 to 1.00% of Cr, 0 to 1.00% of Ni, 0 to 1.00% of V, 0 to 0.01% of Ca, 0 to 0.1% of Nb, 0 to 1% of Sn, 0 to 1% of W, 0 to 1% of Sb, 0 to 0.1% of Mg, 0 to 1% of Co, 0 to 1% of As, 0 to 1% of Zr, 0 to 1% of Bi, 0 to 0.3% of REM, a remainder of Fe, and unavoidable impurities.

The aluminum-based plating layer may comprise 15 wt% or less of Si, a remainder of Al, and unavoidable impurities.

The aluminum-based plating layer may include 10 to 35 wt% of Zn, 15 wt% or less of Si, a remainder of Al, and unavoidable impurities.

According to another aspect of the present disclosure, a method for manufacturing a plated steel sheet comprises: forming an aluminum-based plating layer on a base steel; and
forming a metal layer comprising a metal having higher Gibbs free energy than Al in a reduction reaction with moisture in a gas state at a temperature of 700°C or higher, on the aluminum-based plating layer.

Providing the aluminum-plated steel sheet may comprise:
dipping the base steel sheet into a plating bath including 15 wt% or less of Si, a remainder of Al, and unavoidable impurities to form the aluminum-based plating layer;
cooling the aluminum-based plating layer to a freezing point at an average rate of 20°C/s or more; and
cooling from the freezing point to 350°C at an average rate of less than 20°C/s.

The plating bath may include 10 to 35 wt% of Zn.

The plating bath may include 4 wt% or less of Fe.

The plating bath may include 4.5 wt% or less of one or more of Mg, Mn, Cr, and Ca.

According to still another aspect of the present disclosure, a hot-formed member includes: a base iron and an aluminum-based alloy layer on the base iron,
wherein the base iron has a diffusible hydrogen amount of 0.50 ppm or less.

The hot-formed member may have a maximum bending angle of 49° or more, in a 3-point bending evaluation.

### Advantageous Effects of Invention

The aluminum-plated steel material of the present disclosure may minimize suppression of hydrogen diffusion into a plating layer in a hot forming process, suppress hydrogen introduced into steel to improve resistance to hydrogen embrittlement, and when applied to automotive parts, improve resistance to collision characteristics.

Various and beneficial merits and effects of the present disclosure are not limited to the descriptions above and may be more easily understood in a process of describing specific example embodiments in the present disclosure.

### Best Mode for Invention

Terms used in the present specification are for describing rather than limiting the present disclosure. In addition, a singular form used in the present specification includes a plural form also, unless the relevant definition has a clearly opposite meaning thereto.

The meaning of "comprising" or "including" used in the specification is to embody the configuration and is not to exclude the presence or addition of other configurations.

Unless otherwise defined, all terms including technical terms and scientific terms used in the present specification have the same meaning as commonly understood by a person with ordinary skill in the art to which the present disclosure pertains. Pre-defined terms are interpreted as being consistent with the relevant technical literature and the disclosure herein.

Hydrogen adsorbed in steel of a hot-formed member may cause serious problems with a material such as strength, ductility, rigidity, and bendability. The hot-formed member is mostly formed of a martensite phase, and the martensite is very vulnerable to hydrogen embrittlement. It is because residual stress due to quenching remains after heating in a manufacturing process of the hot-formed member, and a diffusible hydrogen amount entering steel through the plating layer in a hot forming process is increased. In a situation in which higher-strength steel material is used for automotive weight reduction, as the strength of the hot-formed member is increased, problems such as hydrogen delayed fracture and a hydrogen-induced ductility decrease become more important.

The present inventors came to realize that in order to reduce the hydrogen delayed fracture, it is the most effective to decrease a diffusible hydrogen amount in steel. The diffusible hydrogen amount included in the hot-formed member is mostly produced during a hot forming process. In particular, it is produced in a heating furnace where a blank is heated at a high temperature. In a process of heating a blank obtained with a steel material having a plating layer formed of aluminum or an aluminum alloy, moisture present in the atmosphere is brought into contact with a plating layer surface. In this case, moisture at a high temperature is dissociated into oxygen and hydrogen on the surface of the plating layer, and oxygen reacts with a metal component in the plating layer to form an oxide, and hydrogen enters a plating layer. Hydrogen in the plating layer diffuses into steel having an austenite phase having a high hydrogen solid solubility to increase a hydrogen content in steel. In addition, as the temperature of the blank continues to increase, the surface of the plating layer has not yet been alloyed, so that a surface layer changes to a liquid state, and hydrogen solid solubility is increased to further accelerate hydrogen occlusion. Thereafter, the austenite phase of the steel material changes to a martensite having a low hydrogen solubility by quenching of a mold, the plating layer becomes a solid alloy phase, and this makes it difficult to release hydrogen trapped in steel to the outside of steel. Hydrogen trapped as such causes hydrogen delayed fracture.

Accordingly, the present inventors confirmed that when it is suppressed that moisture is dissociated from the surface of the plating layer and occluded in the plating layer, a hydrogen amount entering steel through the plating layer may be effectively reduced, and thus, resistance to hydrogen embrittlement is improved, thereby completing the present disclosure.

In an aluminum-plated steel material, moisture in the atmosphere reacts with a metal atom in a plating layer at a high temperature for hot forming to produce an oxide and hydrogen. Aluminum is present as a liquid phase at about 900°C which is a temperature for hot forming, and a liquid phase metal as such and moisture react to produce aluminum oxide and hydrogen. Among them, hydrogen is dissociated into atoms and adsorbed on the plating layer. When the surface is iron (Fe), it is present as a solid phase at 900°C, and a solid phase iron atom and moisture in a gas state react to form iron oxides (such as Fe₂O₃ and Fe₃O₄). The driving force of the reaction may be determined by Gibbs free energy (ΔG), and as the Gibbs free energy is lower, the reaction occurs well.

The following Table 1 shows the Gibbs free energy when iron (Fe), aluminum (Al), zinc (Zn), magnesium (Mg), and nickel (Ni) metals react with gaseous moisture (H₂O) at 700°C and 900°C.

The reaction between gaseous moisture and a metal atom may significantly occur from 700°C or higher, and in the reduction reaction with gaseous moisture at 700°C or higher, a metal having higher Gibbs free energy than aluminum (Al) may have decreased hydrogen adsorption.

**[Table 1]**

| Classification | 700°C, ΔG (kJ) | 900°C, ΔG (kJ) |
|---|---|---|
| Fe(s) + H₂O(g) → FeO(s) + H₂(g) | -7.428 | -5.684 |
| 2Fe(s) + 3H₂O(g) → Fe₂O₃(s) + 3H₂(g) | -12.763 | -28.834 |
| 3Fe(s) + 4H₂O(g) → Fe₃O₄(s) + 4H₂(g) | -22.497 | -6.905 |
| 2Al(l) + 3H₂O(g) → Al₂O₃(s) + 3H₂(g) | -787.937 | -755.070 |
| Zn(l) + H₂O(g) → ZnO(s) + H₂(g) | -56.857 | -46.490 |
| Mg(l)+H₂O(g) → MgO(s) + H₂(g) | -302.236 | -290.256 |
| Ni(s)+H₂O(g) → NiO(s) + H₂(g) | -42.641 | -48.481 |

The present disclosure has been invented based on the above description, and hereinafter, the present disclosure will be described in detail.

First, an example of the aluminum-plated steel material of the present disclosure will be described in detail.

The plated steel material includes a base steel, and an aluminum plating layer formed on a surface of the base steel, wherein a metal layer is included on a surface of the aluminum-based plating layer, and the metal layer includes a metal having higher Gibbs free energy (ΔG, unit: kJ) than Al in a reduction reaction with moisture in a gas state at a temperature of 700°C or higher, preferably 700 to 950°C. As a specific example, the Gibbs free energy (ΔG, unit: kJ) in the reduction reaction with moisture in a gas state at the said temperature may be -350 kJ or more.

As described above, the metal layer serves to prevent hydrogen from being adsorbed onto the plating layer, when aluminum in the aluminum-based plating layer is dissociated into an oxide and hydrogen with moisture in the atmosphere at a high temperature for hot forming. Since the metal of the metal layer has higher Gibbs free energy (ΔG, unit: kJ) than Al in a reduction reaction at a high temperature, adsorption of hydrogen onto the plating layer may be suppressed.

The metal may be zinc (Zn), iron (Fe), magnesium (Mg), nickel (Ni), and the like.

Meanwhile, as the metal in the metal layer, a metal having a less dissociated hydrogen amount per unit mass for each metal in the reduction reaction with moisture in a gas state at a temperature of 700°C or higher is preferred.

In Table 1, in the case of aluminum (Al), hydrogen produced by 1 g of aluminum is 0.056 mol.

From the perspective, it is preferred that a plating amount on the metal layer is different from the metals.

As a specific example, Fe may be 0.7 to 3.5 g/m², Ni may be 2.0 to 10.0 g/m², and Zn may be 1.0 to 40 g/m².

When the Fe content is less than 0.7 g/m², a continuous layer is not formed, so that it is difficult to expect a sufficient hydrogen adsorption inhibition effect, and when it is more than 3.5 g/m², a Fe-based oxide is formed to be thick on the plating layer through a reaction with oxygen in the atmosphere, and in this case, a process for separately removing the layer for electrodeposition painting after hot forming may be needed to increase manufacturing costs.

When the Ni content is less than 2.0 g/m², it is difficult to form a continuous layer on the surface layer, and when it is more than 10.0 g/m², a hydrogen adsorption effect is saturated, but cost for plating is increased to deteriorate usefulness.

When the Zn content is less than 1.0 g/m², it is difficult to form a continuous layer on the surface layer, and when it is more than 40.0 g/m², an excessive zinc oxide is formed on the surface during a heat treatment for hot forming, a separate process for removing the zinc oxide, and cost for plating is increased, which is not preferred.

The base steel is not particularly defined in the present disclosure, and the type, composition, and the like are not particularly defined as long as it may be used in the art to which the present disclosure pertains. The base steel may be a hot-rolled steel sheet, a cold-rolled steel sheet, an annealed steel sheet, and the like, and the shape such as a steel sheet, a wire rod, and a rod steel, is not distinguished.

The composition of the base steel is not particularly limited and is sufficient if it may be used as a hot-formed member. As a preferred example, the base iron may include, by weight: 0.02 to 0.6% of C, 0.001 to 2% of Si, 0.001 to 1% of Al, 0.1 to 4% of Mn, 0.05% or less of P, 0.02% or less of S, 0.02% or less of N, 0 to 0.1% of Ti, 0.0001 to 0.01% of B, 0 to 1.00% of Cu, 0 to 1.00% of Mo, 0 to 1.00% of Cr, 0 to 1.00% of Ni, 0 to 1.00% of V, 0 to 0.01% of Ca, 0 to 0.1% of Nb, 0 to 1% of Sn, 0 to 1% of W, 0 to 1% of Sb, 0 to 0.1% of Mg, 0 to 1% of Co, 0 to 1% of As, 0 to 1% of Zr, 0 to 1% of Bi, 0 to 0.3% of REM, a remainder of Fe, and unavoidable impurities.

The aluminum-based plating layer refers to a plating layer having Al as a main component, and the composition of the aluminum-based plating layer may include, as an example, 15 wt% or less of Si, a remainder of Al, and unavoidable impurities. The aluminum-based plating layer may include, as another example, 10 to 35 wt% of Zn, 15 wt% or less of Si, a remainder of Al, and unavoidable impurities, preferably, 15 to 30 wt% of Zn, 12 wt% or less of Si, a remainder of Al, and unavoidable impurities, and more preferably, 20 to 28 wt% of Zn, 9 wt% of Si, a remainder of Al, and unavoidable impurities.

Meanwhile, the aluminum-based plating layer may further include 4 wt% of less of Fe. In addition, in order to improve corrosion resistance, one or more of Mg, Mn, Cr, and Ca may be included at 4.5 wt% or less.

Next, a method for manufacturing an aluminum-plated steel material of the present disclosure will be described in detail.

The manufacturing method includes: forming an aluminum-based plating layer on a base steel; and
forming a metal layer including a metal having higher Gibbs free energy than Al in a reduction reaction with moisture in a gas state at a temperature of 700°C or higher, on the aluminum-based plating layer.

The base steel has no difference from that described above.

A method for forming the aluminum-based plating layer such as hot-dip plating and electroplating is not particularly limited.

As an example, a cold-rolled steel sheet for hot forming is annealed and dipped into a hot-dip plating bath, a plating amount is adjusted, and cooling is performed to manufacture a plated steel sheet. Specifically, the composition of the hot-dip plating bath may include, as an example, 15 wt% or less of Si, a remainder of Al, and unavoidable impurities. The aluminum-based plating layer may include, as another example, 10 to 35 wt% of Zn, 15 wt% or less of Si, a remainder of Al, and unavoidable impurities, preferably, 15 to 30 wt% of Zn, 12 wt% or less of Si, a remainder of Al, and unavoidable impurities, and more preferably, 20 to 28 wt% of Zn, 9 wt% of Si, a remainder of Al, and unavoidable impurities.

Meanwhile, the aluminum-based plating layer may further include 4 wt% of less of Fe. In addition, in order to improve corrosion resistance, one or more of Mg, Mn, Cr, and Ca may be included at 4.5 wt% or less.

Among the plating bath components, Si serves to prevent formation of an Al-Fe alloy layer by a bond of aluminum with Fe in the base steel sheet and prevent erosion of plating equipment dipped into the plating bath. However, when it is excessive at more than 15 wt%, growth of an Al-Fe alloy layer may be excessively suppressed to cause liquid metal embrittlement (LME).

Zn suppresses diffusion of Si to the surface layer as a solid phase grows during a heat treatment for manufacturing a hot-formed member and adjusts the position of a second alloy layer, and simultaneously, may be included at 10 wt% or more for securing corrosion resistance of the hot-formed member. However, above 35 wt%, the melting point of the plating layer is lowered, and flowability is increased to increase a possibility of liquid metal embrittlement. Meanwhile, it may be preferably 15 to 30 wt%.

Meanwhile, Fe in the plating bath is eluted from the base steel sheet over time during a continuous plating process and exists cumulatively, and may be managed to be 4 wt% or less for preventing dross defects.

The metal layer may be formed through hot-dip plating, electroplating, PVD deposition methods, and the like.

Next, a hot-formed member manufactured using the aluminum-plated steel sheet will be described in detail.

The hot-formed member has a diffusible hydrogen amount of preferably 0.50 ppm or less.

The hot-formed member has a maximum bending angle of preferably 49° or more in a 3-point bending evaluation.

In the hot-formed member, base iron which is a base material in the member obtained by hot forming of the aluminum-plated steel material for hot forming occupies the most of the thickness in the cross section of the hot-formed member. The base iron is a base material of the hot-formed member obtained by hot forming of the base steel which is the base material of the steel material for hot forming. Herein, the base iron may mainly have a martensite structure usually through hot forming and cooling.

Meanwhile, the hot-formed member is heated for a certain period of time until the aluminum-plated steel material entering a heating furnace at room temperature undergoes austenite transformation. The state of the aluminum-based plating layer changes from a solid phase to a liquid phase over time, changes again to an intermetallic compound by Fe diffusion of the base material, and finally changes to a solid phase. In this process, Fe of the base material and the plating layer form an intermetallic compound, and the aluminum-based plating layer changes into an aluminum-based alloy layer.

The hot-formed member may be manufactured by heating, working forming, and cooling the aluminum-plated steel material, and the plated steel material may be manufactured into a blank form for effective manufacture.

The heating may be performed at a temperature of Ac3 or higher and 970°C or lower, preferably 850 to 950°C. As an example, the aluminum-plated steel sheet is placed into a heat treatment furnace set at the temperature, and heating may be performed for 180 to 600 seconds so that the structures of steel all transform into austenite. When the temperature is too low, it is difficult for the steel material to completely transform into an austenite single phase, and when the temperature is too high, the surface may be oxidized or a hydrogen content in steel is increased, and in the plating layer, volatility in a liquid phase is severe, and a sufficient plating layer may not remain, resulting in corrosion resistance deterioration.

The aluminum-plated steel sheet changing into an austenite single phase due to heating is transferred from a heating furnace and settled down in a mold and is worked and cooled simultaneously by the mold. A transfer time from the heating furnace to the mold is preferably within 15 seconds, and when it is later than this, the material is naturally cooled before quenching in the mold to form ferrite, resulting in deterioration of the material.

A critical cooling rate for obtaining martensite transformation in the mold may be different from the steel components, but as an example, considering that the cooling is performed during transfer from the heating furnace to the mold, it is effective that the average cooling rate starting from 700°C which is an initial temperature of the material placed in the mold to 350°C is 20 to 50°C/s.

### Mode for Invention

Hereinafter, the examples of the present disclosure will be described. It is apparent that the following examples may be variously modified by a person skilled in the art to which the present disclosure pertains without departing from the scope of the present disclosure. The following examples are for understanding of the present disclosure, and the scope of the right of the present disclosure is limited not by the following examples, but by the claims described later and the equivalents thereto.

### (Examples)

A cold-rolled steel sheet having the composition of the following Table 2 (unit, wt%, a remainder of Fe and unavoidable impurities) was prepared, heated from room temperature to 780°C, and maintained at an annealing temperature of 780°C for 80 seconds in an annealing furnace of a nitrogen atmosphere containing 5% hydrogen for plating, and then dipped into an Al plating bath including 9 wt% of Si to manufacture an aluminum-plated steel sheet. After the plating, a plating amount was adjusted through an air knife.

The metal of Table 3 was electroplated on the surface of the aluminum-plated steel sheet manufactured above to form a metal layer. The entire plating layer of the metal layer and the aluminum-based plating layer was dissolved, ICP analysis was performed, and the resulting component contents are shown together in Table 3.

**[Table 2]**

| Classification | C | Si | Mn | P | Al | Cr | B | Ti | N |
|---|---|---|---|---|---|---|---|---|---|
| Content (wt%) | 0.21 | 0.21 | 1.1 | 0.01 | 0.03 | 0.2 | 0.0027 | 0.030 | 0.004 |

**[Table 3]**

| Specimen No. | Metal layer | | Deposition amount and component of entire plating layer (wt%) | | | | | | |
|---|---|---|---|---|---|---|---|---|---|
| | Metal | Deposition amount (g/m²) | Deposition amount (g/m²) | Al | Si | Fe | Zn | Mn | Ni |
| 1 | - | - | 70 | 91 | 9 | 0.00 | 0.00 | 0.00 | 0.00 |
| 2 | Fe | 0.5 | 67 | 81.66 | 8.31 | 9.90 | 0.00 | 0.13 | 0.00 |
| 3 | Fe | 1 | 58 | 81.37 | 8.01 | 10.48 | 0.00 | 0.14 | 0.00 |
| 4 | Fe | 5 | 67 | 74.23 | 7.50 | 18.15 | 0.00 | 0.12 | 0.00 |
| 5 | Ni | 0.5 | 81 | 80.04 | 9.34 | 9.63 | 0.00 | 0.17 | 0.81 |
| 6 | Ni | 1 | 89 | 80.18 | 9.72 | 9.03 | 0.00 | 0.15 | 0.91 |
| 7 | Ni | 3 | 84 | 77.35 | 9.84 | 8.67 | 0.00 | 0.12 | 4.02 |
| 8 | Zn | 0.5 | 57 | 80.98 | 8.97 | 9.11 | 0.79 | 0.14 | 0.00 |
| 9 | Zn | 1 | 66 | 78.95 | 9.31 | 9.68 | 1.85 | 0.22 | 0.00 |
| 10 | Zn | 1.5 | 64 | 80.67 | 8.53 | 8.72 | 1.95 | 0.13 | 0.00 |
| 11 | Zn | 2.0 | 80 | 79.20 | 8.61 | 9.14 | 2.92 | 0.13 | 0.00 |
| 12 | Zn | 2.5 | 56 | 77.83 | 8.79 | 9.24 | 3.94 | 0.19 | 0.00 |
| 13 | Zn | 10 | 50 | 71.32 | 8.45 | 7.73 | 12.38 | 0.12 | 0.00 |
| 14 | Zn | 20 | 42 | 62.73 | 9.02 | 6.63 | 21.51 | 0.11 | 0.00 |
| 15 | Zn | 30 | 57 | 57.39 | 6.25 | 6.10 | 30.15 | 0.11 | 0.00 |
| 16 | Zn | 40 | 73 | 52.01 | 5.38 | 5.36 | 37.14 | 0.11 | 0.00 |

In order to confirm the resistance to hydrogen embrittlement and bendability for the specimens after the hot forming, hot forming conditions were simulated, each specimen was heated in a furnace at 900°C for 5 minutes, and then cooled under the condition of a cooling rate of 20°C/s.

The diffusible hydrogen amount was measured by heat treating the specimen, cutting the size of the specimen into 3 cm*8 cm, and using G8 Galileo (Bruker). It is the results of measuring a hydrogen amount produced after heating the specimen from room temperature to 500°C, and for bendability, a maximum bending angle was measured through a 3-point bending evaluating machine through the VDA standards. The results are shown in Table 4.

**[Table 4]**

| Specimen No. | Diffusible hydrogen amount (ppm) | Maximum bending angle (°) | Classification |
|---|---|---|---|
| 1 | 0.52 | 48.0 | Conventional Example |
| 2 | 0.52 | 54.3 | Comparative Example |
| 3 | 0.47 | 52.4 | Inventive Example |
| 4 | 0.52 | 55.5 | Comparative Example |
| 5 | 0.52 | 49.1 | Comparative Example |
| 6 | 0.47 | 52.6 | Comparative Example |
| 7 | 0.40 | 49.8 | Inventive Example |
| 8 | 0.51 | 52.5 | Comparative Example |
| 9 | 0.35 | 53.6 | Inventive Example |
| 10 | 0.37 | 55.3 | Inventive Example |
| 11 | 0.29 | 55.2 | Inventive Example |
| 12 | 0.28 | 54.7 | Inventive Example |
| 13 | 0.32 | 55.9 | Inventive Example |
| 14 | 0.39 | 51.5 | Inventive Example |
| 15 | 0.35 | 53.4 | Inventive Example |
| 16 | 0.42 | 55.5 | Inventive Example |

The inventive examples according to the present disclosure were confirmed to have a decreased diffusible hydrogen amount and increased bendability, as compared with the conventional examples. Meanwhile, as a result of confirmation through the inventive examples and the comparative example, it was confirmed that the diffusible hydrogen amount and the bending characteristic varied depending on the type of metal and the plating deposition amount.

## Claims

1. An aluminum-plated steel material comprising: a base steel, and an aluminum-based plating layer formed on the base steel,
wherein a metal layer is comprised on the aluminum-based plating layer, and
the metal layer coprises a metal having higher Gibbs free energy than Al in a reduction reaction with moisture in a gas state at a temperature of 700°C or higher.

2. The aluminum-plated steel material of claim 1, wherein the metal is one or more of Fe, Zn, Ni, and Mg.

3. The aluminum-plated steel material of claim 2, wherein when the metal is Fe, its plating amount is 0.7 to 3.5 g/m².

4. The aluminum-plated steel material of claim 2, wherein when the metal is Ni, its plating amount is 2.0 to 10.0 g/m².

5. The aluminum-plated steel material of claim 2, wherein when the metal is Zn, its plating amount is 1.0 to 40 g/m².

6. The aluminum-plated steel material of claim 1, wherein the base steel comprises, by weight: 0.02 to 0.6% of C, 0.001 to 2% of Si, 0.001 to 1% of Al, 0.1 to 4% of Mn, 0.05% or less of P, 0.02% or less of S, 0.02% or less of N, 0 to 0.1% of Ti, 0.0001 to 0.01% of B, 0 to 1.00% of Cu, 0 to 1.00% of Mo, 0 to 1.00% of Cr, 0 to 1.00% of Ni, 0 to 1.00% of V, 0 to 0.01% of Ca, 0 to 0.1% of Nb, 0 to 1% of Sn, 0 to 1% of W, 0 to 1% of Sb, 0 to 0.1% of Mg, 0 to 1% of Co, 0 to 1% of As, 0 to 1% of Zr, 0 to 1% of Bi, 0 to 0.3% of REM, a remainder of Fe, and unavoidable impurities.

7. The aluminum-plated steel material of claim 1, wherein the aluminum-based plating layer comprises 15 wt% or less of Si, a remainder of Al, and unavoidable impurities.

8. The aluminum-plated steel material of claim 1, wherein the aluminum-based plating layer comprises 10 to 35 wt% of Zn, 15 wt% or less of Si, a remainder of Al, and unavoidable impurities.

9. A method for manufacturing a plated steel sheet, the method comprising:
forming an aluminum-based plating layer on a base steel; and
forming a metal layer comprising a metal having higher Gibbs free energy than Al in a reduction reaction with moisture in a gas state at a temperature of 700°C or higher, on the aluminum-based plating layer.

10. A method for manufacturing hot-formed member, wherein providing the aluminum-plated steel sheet of claim 9 comprises:
dipping a base steel sheet into a plating bath including 15 wt% or less of Si, a remainder of Al, and unavoidable impurities to form an aluminum-based plating layer;
cooling the aluminum-based plating layer to a freezing point at an average rate of 20°C/s or more; and
cooling from the freezing point to 350°C at an average rate of less than 20°C/s.

11. The method for manufacturing a hot-formed member of claim 10, wherein the plating bath comprises 10 to 35 wt% of Zn.

12. The method for manufacturing a hot-formed member of claim 10, wherein the plating bath comprises 4 wt% or less of Fe.

13. The method for manufacturing a hot-formed member of any one of claims 10 to 12, wherein the plating bath comprises one or more of Mg, Mn, Cr, and Ca at 4.5 wt% or less.

14. A hot-formed member comprising a base iron and an aluminum-based alloy layer on the base iron, wherein the base iron has a diffusible hydrogen amount of 0.50 ppm or less.

15. The hot-formed member of claim 14, wherein the hot-formed member has a maximum bending angle of 49° or more in a 3-point bending evaluation.
